# EUROPEAN PATENT APPLICATION

(11) **EP 1 643 363 A1**
(43) Date of publication of application: **05.04.2006**
(21) Application number: 05017838.3
(22) Date of filing: 17.08.2005
(51) Int. Cl.: G06F 9/46

(54) **Base band board and method of thereof processing multi-standard services**

(30) Priority: 29.09.2004 CN 200410066880
(71) Applicant: ALCATEL, 75008 Paris (FR)
(72) Inventor: Luo, Zhigang, Pudong Jinqiao 201206 Shanghai (CN)
(74) Representative: Dreiss, Fuhlendorf, Steimle & Becker

(57) **Abstract**

The present invention discloses a base band board supporting multiple standards, the base band board comprises only one DSP cluster, a plurality of DSPs of the DSP cluster being connected together via a bus for providing resources for uplink and downlink processing of various services of each standard, the base band board further comprises a controller for controlling allocation of resources of the plurality of DSPs, the controller performing corresponding processing based on the type of a received request message and resources of the DSP cluster required by the uplink and downlink processing of various services of each standard. According to the present invention, the cost of a base band board can be reduced, processing resources of the base band board can be saved and the base band board can be updated easily.

## Description

### FIELD OF THE INVENTION

The present invention relates to the communication field, and more particularly, to a base band board supporting multi standards and a method of thereof processing multi-standard services.

### BACKGROUND OF THE INVENTION

Major functions of a base station in a wireless communication system includes three parts, i.e. a wireless transmitting and receiving part, a signal processing part and a network transmitting part, in which the signal processing part, comprising chip rate processing and symbol rate processing, consumes the most resources of the base station.

According to the conventional base band board supporting multi-standard of base station, it usually employs:
1. a plurality of Application-Specific Integrated Circuit (ASIC) chips for uplink and downlink processing of various standards, respectively;
2. a plurality of Field Programmable Gate Arrays (FPGA) for uplink and downlink processing of various standards, respectively;
3. a plurality of Digital Signal Processor (DSP) clusters for uplink and downlink processing of various standards, respectively.

The first approach has such a problem that the design cycle is relatively long and it is not flexible and is difficult to update; The second approach has such a problem that the cost is comparatively high;

And the third approach has such a problem that a lot of processing resources are wasted.

### SUMMARY OF THE INVENTION

It is an object of the present invention to reduce the cost of a base band board, save the processing resources of the base band board and enable the base band board to be updated easily.

To achieve the above object, the present invention proposes a base band board supporting multiple standards, the base band board comprises only one DSP cluster, a plurality of DSPs of the DSP cluster being connected together via a bus for providing resources for uplink and downlink processing of various services of each standard, the base band board further comprises a controller for controlling allocation of resources of the plurality of DSPs, the controller performing corresponding processing based on the type of a received request message and resources of the DSP cluster required by the uplink and downlink processing of various services of each standard.

The present invention further proposes a method of a base band board, which supports multiple standards, processing multi-standard services, the base band board comprises only one DSP cluster, a plurality of DSPs of the DSP cluster being connected together via a bus for providing resources for uplink and downlink processing of various services of each standard, the base band board further comprises a controller for controlling the allocation of resources of the plurality of DSPs, the method includes the steps of: receiving, by the controller, a request message; deciding, by the controller, the type of the received request message; and performing, by the controller, corresponding processing based on the decision result.

Preferably, the base band board further comprises storage means, the storage means being connected via the bus with the DSP cluster and comprising components for achieving each task of the uplink and downlink processing of various services of each standard.

Preferably, the base band board supports two standards, namely the Universal Mobile Telecommunications System-Frequency Division Duplex (UMTS-FDD) standard and the High Speed Downlink Packet Access (HSDPA) standard.

Preferably, if the received request message involves setting up a UMTS-FDD service link, the controller computes resources of the DSP cluster required for the UMTS-FDD service and performs corresponding processing; if the received request message involves setting up a HSDPA service link, the controller computes resources of the DSP cluster required for the HSDPA service link and performs corresponding processing; if the received request message involves setting up a UMTS-FDD service link and a HSDPA service link, the controller computes resources of the DSP cluster required for both the UMTS-FDD service link and the HSDPA service link, respectively, and performs corresponding processing.

Preferably, the controller is one of the DSPs of the DSP cluster.

Preferably, the controller is a processor which is connected with the DSP cluster via the bus.

### BRIEF DESCRIPTION ON THE DRAWINGS

Fig. 1 shows the downlink processing of a base station according to the UMTS-FDD standard;
Fig. 2 shows the uplink processing of a base station according to the UMTS-FDD standard;
Fig. 3 shows the downlink processing of a base station according to the HSDPA standard;
Fig. 4 is a block diagram that schematically shows a base band board supporting multiple standards according to an embodiment of the present invention;
Fig. 5 is a block diagram that schematically shows a base band board supporting multiple standards according to another embodiment of the present invention;
Fig. 6 is a flow chart showing the process of designing a base band board, which supports multiple standards, according to an embodiment of the present invention; and
Fig. 7 is a flow chart showing the process of a base band board, which supports multiple standards, processing multi-standard wireless services according to an embodiment of the present invention.

### DESCRIPTION OF THE PREFERRED EMBODIMENTS

Hereinafter, the present invention will be described in detail with reference to the accompanying drawings.

For the purpose of convenience, the following description is based on the Universal Mobile Telecommunications System - Frequency Division Duplex (UMTS-FDD) standard and the High Speed Downlink Packet Access (HSDPA) standard. Of course, those skilled in the art should understand that the present invention is not limited thereto.

According to the UMTS-FDD standard, the major services, such as voice service and data service, are mainly carried on Dedicated Channel (DCH). While according to the HSDPA standard, the major services are mainly carried on High Speed Downlink Shared Channel (HS-DSCH).

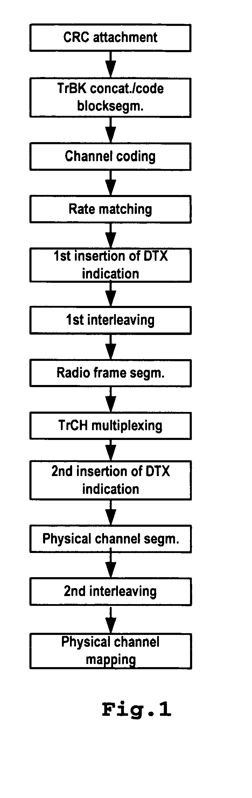

According to the UMTS-FDD standard specified by the 3rd Generation Mobile Communication Standardization Organization 3GPP, downlink processing of a base station is as shown in Fig. 1.

Firstly, cyclic redundant check (CRC) attachment is performed on the data to be transmitted. Next, transport block concatenation and code block segmentation are done. Afterwards, channel coding is done. Then, rate matching is performed. Subsequently, the fist insertion of discontinuous transmission (DTX) indication is performed, which is followed by the first interleaving, radio frame segmentation and transport channel multiplexing successively. After that, the second insertion of DTX indication, physical channel segmentation and the second interleaving are performed in turn. Lastly, physical channel mapping is carried out and the downlink processing is ended.

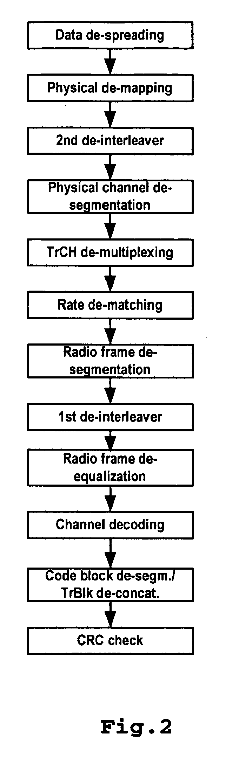

According to the UMTS-FDD standard specified by the 3rd Generation Mobile Communication Standardization Organization 3GPP, uplink processing of a base station is as shown in Fig. 2, which is substantially opposite to the downlink processing.

Firstly, data de-spreading is performed on the data uploaded from a mobile terminal. Next, physical channel de-mapping is done. Afterwards, the second de-interleaving is done. Then, physical channel de-segmentation is performed. Subsequently, transport channel de-multiplexing is performed, which is followed by rate de-matching, radio frame de-segmentation and the first de-interleaving successively. After that, radio frame de-equalization, channel decoding, and code block de-segmentation and transport block de-concatenation are performed in turn. Lastly, CRC check is carried out and the uplink processing is ended.

For UMTS-FDD that provides services which are symmetric in uplink and downlink, the uplink processing (e.g. symbol rate processing and data de-spreading) consumes much more resources than the downlink processing (e.g. symbol rate and bit rate processing).

For HSDPA that provides services which are asymmetric in uplink and downlink, the downlink processing consumes much more resources of a base station, while the uplink processing consumes few resources of the base station and can even be ignored.

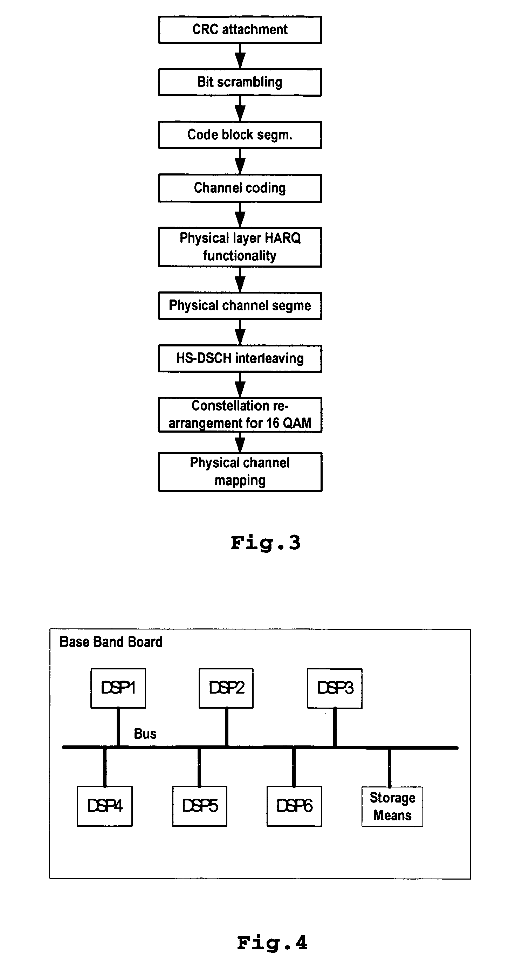

According to the HSDPA standard, the downlink processing of the base station is as shown in Fig. 3.

Firstly, CRC attachment is performed on the data to be transmitted. Next, bit scrambling is done. Afterwards, code block segmentation is done. Then, channel coding is performed. Then, physical layer hybrid automatic repeat request (HARQ) functionality is performed. Subsequently, physical channel segmentation is carried out, which is followed by HS-DSCH interleaving and constellation rearrangement for 16 quadrature amplitude modulation (QAM) successively. Lastly, physical channel mapping is performed and the downlink processing is ended.

Fig. 4 is a block diagram that schematically shows a base band board supporting multiple standards according to an embodiment of the present invention.

As shown in Fig. 4, it comprises one DSP cluster consisting of six DSPs. The six DSPs are connected together via a bus. The base band board further comprises storage means. The storage means comprises components performing each task of uplink and downlink processing of various services of various standards, such as encoder components, decoder components, rate matcher components and interleaver components, and the storage means is connected with each DSP via the bus. Among the six DSPs, one DSP serves as the controller of the DSP cluster for controlling the allocation of resources of each DSP, and balancing the resources required between uplink processing and downlink processing of each service of each standard.

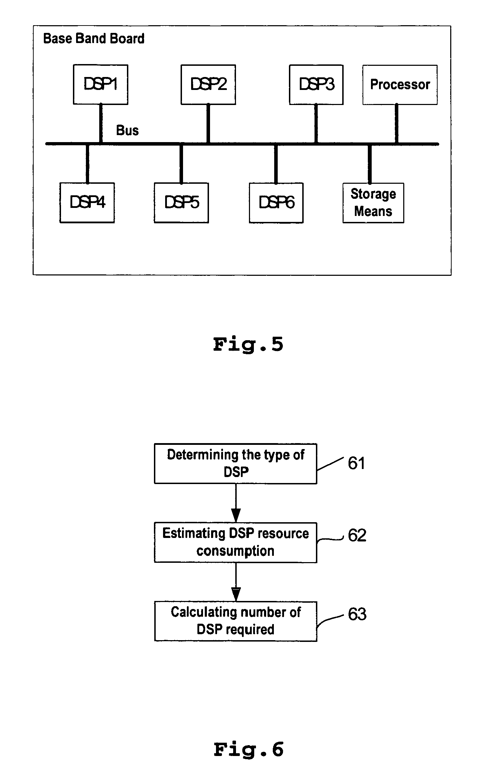

Fig. 5 is a block diagram that schematically shows a base band board supporting multiple standards according to another embodiment of the present invention.

As shown in Fig. 5, it is substantially the same as the base band board shown in Fig. 4. The difference is that the base band board as shown in Fig. 5 further comprises a processor. The processor, which is connected with the DSP cluster via the bus, serves as the controller of the DSP cluster for controlling the allocation of resources of each DSP, and balancing resources required between uplink processing and downlink processing of each service of each standard. Like other DSPs, the aforesaid DSP for controlling the DSP cluster is used to provide resources for uplink and downlink processing of various services of each standard.

Fig. 6 is a flow chart illustrating a processing of designing a base band board, which supports multiple standards, according to an embodiment of the present invention. The base band board comprises only one DSP cluster for providing resources for uplink and downlink processing of various services of each standard.

Firstly, the model of DSP to be used is determined in step 61.

According to an embodiment of the present invention, the employed DSP is TigerSHARC TS101 of Analog Devices® with the processing frequency of 250 MHZ.

Next, the flow goes to step 62. In this step, DSP resource consumption is estimated based on the DSP model determined in the preceding step and services to be provided by each standard, which the base band board is designed to support.

According to an embodiment according to the present invention, the base band board supports two standards, namely UMTS-FDD and HSDPA. For only UMTS-FDD services, the base band board supports 75 voice channels, each of which has a rate of 12.2 kbps; or supports 24 data channels, each of which has a rate of 64 kbps; or supports 4 data channels, each of which has a rate of 384 kbps. For only HSDPA services, the base band board supports data service whose downlink rate can reach to a maximum of 14 Mbps.

Of course, the base band board supports voice service and 64kbps data service of UMTS-FDD, or voice service and 384kbps data services of UMTS-FDD, or voice service of UMTS-FDD and data service of HSDPA, simultaneously. However, total resources required by these services should not exceed the resources the base band board can provide.

According to an embodiment according to the present invention, DSP resource consumption is measured by cycle counts, and resource consumption of TigerSHARC TS101 is estimated by VisualDSP++.

Table 1 shows DSP resource consumption of downlink symbol rate processing of UMTS-FDD services.

**Table 1**

| | Kcycles/s required for 12.2kbps voice channel | Kcycles/s required for 64Kbps data channel |
|---|---|---|
| CRC generation and attachment | 28.4 | 130.2 |
| Transport block concat./code block segm. | 0 | 0 |
| Channel coding(conv. encoder) | 34.4 | |
| Channel coding(Turbo encoder) | | 424.4 |
| Rate matching | 110.6 | 585 |
| 1st insertion of DTX indication | 0 | 0 |
| 1st interleaving | 49.3 | 216.7 |
| Radio frame segm. | 34.3 | 150.7 |
| Transport channel multiplexing | 58 | 333.2 |
| 2nd insertion of DTX indication | 0 | 0 |
| Physical channel segmentation | 0 | 0 |
| 2nd interleaving | 65 | 263 |
| Physical channel mapping | 0 | 0 |
| Multiplexing of DPCCH with DPDCH | 60 | 240 |
| Subtotal (Mcycles/s) | 0.421 | 2.343 |
| Total load for x | 75*0.421=31.575 | 24*2.343=56.232 |
| channels (x=...) | | |

Considering that related control functions (e.g. CRC generation and attachment, channel encoding, rate matching, 1st interleaving, radio frame segmentation, etc) might consume more resources, 20% margins to the total Mcycles as obtained in Table 1 are added. The estimated DSP resource consumption of downlink symbol rate processing of UMTS-FDD services is presented in Table 2:

**Table 2**

| | Voice service (12.2kbps) | | Data service(64Kbps) | |
|---|---|---|---|---|
| Number of channel | 1 | 75 | 1 | 24 |
| DSP resource consumption of downlink processing (Mcycles/s) | 0.505 | 37.89 | 2.81 | 67.48 |

Table 3 shows DSP resource consumption of uplink symbol rate processing of UMTS-FDD services.

**Table 3**

| | Kcycles/s required for 12.2kbps voice channel | Kcycles/s required for 64Kbps data channel |
|---|---|---|
| Physical channel de-mapping | 0 | 0 |
| 2nd de-interleaving | 98 | 346.5 |
| Physical channel de-segmentation | 0 | 0 |
| Traffic channel de-multiplexing | 66 | 245 |
| Rate de-matching | 181 | 678.3 |
| Radio frame de-segmentation | 51.2 | 190.4 |
| 1st de-interleaving | 70.3 | 289.6 |
| Radio frame equalization | 0 | 0 |
| Channel decoding (Viterb) | 957.6 | |
| Channel decoding (Turbo) | | 8014.2 |
| Tansport block segm./code block concat. | 0 | 51.8 |
| CRC checking | 24.2 | 126.8 |
| Subtotal Mcycles/s | 1.4623 | 9.9426 |
| Total load for x channels (x=...) | 75*1.4623=109.67 | 24*9.9426=238.622 |

Considering that related control functions might consume more resources, 20% margins to the total Mcycles as obtained in Table 3 are added. To obtain DSP resource consumption of uplink processing of UMTS-FDD services, DSP resource consumption of data de-spreading is further added based that 20% margins to the total Mcycles as obtained in Table 3 are added.

Table 4 shows the estimated DSP resource consumption of uplink processing (including symbol rate processing and data de-spreading) of UMTS-FDD services.

**Table 4**

| | voice service (12.2 kbps) | | Data service (64Kbps) | |
|---|---|---|---|---|
| Number of channel | 1 | 75 | 1 | 24 |
| DSP resource consumption of uplink symbol rate processing (Mcycles/s) | 1.75 | 131.61 | 11.93 | 286.35 |
| DSP resource consumption of uplink data despreading (Mcycles/s) | 3.43 | 255.40 | 3.62 | 86.67 |
| Total DSP resource consumption of uplink processing (Mcycles/s) | 5.18 | 387.01 | 15.55 | 373.02 |

Table 5 shows DSP resource consumption of downlink processing of HSDPA data service.

**Table 5**

| | Size of transport block: 28475 bits; transmission rate: 14.29 Mbps; modulation format: 16QAM (Cycles/s) |
|---|---|
| Reorder bytes to adapt order to CRC | 40530 |
| CRC calculation, CRC 16 is configured | 80571 |
| TrBlk segmentation | 5064 |
| packing/unpacking data | 24815 |
| turbo interleaver | 43083 |
| packing/unpacking data | 31893 |
| turbo coding | 67422 |
| TrBlk concatenation | 71339 |
| 1st rate matching | 209820 |
| 2nd rate matching | 72000 |
| Physical Channel Segmentation* | 28800 |
| HS-DSCH Interleaving | 75744 |
| 16QAM Rearrangement | 8537 |
| TOTAL CYCLES per TTI(2ms) | 759618 |
| Mcycles/s | 379.81 |

Considering that related control functions might consume more resources, 20% margins to the total Mcycles as obtained in Table 5 are added.

The estimated DSP resource consumption of downlink processing of data service of HSDPA is presented in Table 6.

**Table 6**

| | HS-DSCH (14.29Mbps) |
|---|---|
| Transport Block Size | 28457 bits |
| Modulation Scheme | 16QAM |
| Total consumption of downlink processing (Mcycles/s) | 455.77 |

Upon completion of the estimating step, the flow goes to step 63, in which the number of the selected DSPs is determined.

The main frequency of TS101 is 250MHZ, and 40% of the processing resource, or 100MHZ, can be used to perform symbol rate processing and chip rate processing. Therefore, six TS101 is enough to meet requirements according to the above estimation results.

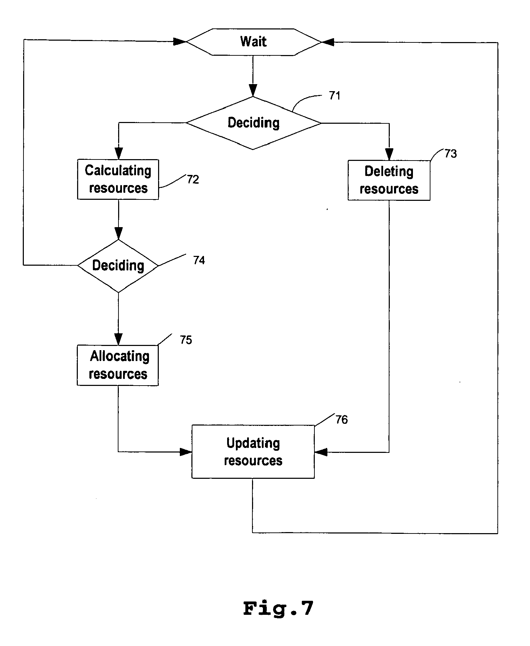

Fig. 7 is a flow chart showing the process of a base band board, which supports multiple standards, processing multi-standard wireless services according to an embodiment of the present invention.

The base band board comprises only one DSP cluster for providing resources for uplink and downlink processing of various services of each standard. In the DSP cluster, one DSP is a controller for controlling the allocation of resources of each DSP, and balancing resources between uplink and downlink processing of various services of each standard. Or the base band board further comprises a processor. The processor, which is connected via a bus with the DSP cluster, serves as the controller of the DSP cluster for controlling the allocation of resources of each DSP, and balancing resources between uplink and downlink processing of various services of each standard.

First, the controller of the base band board is in a wait state. Upon receipt of a request, the flow goes to step 71.

In step 71, the type of the received request is decided. If the request is radio link setup, the flow goes to step 72. If the request is radio link deletion, the flow goes to step 73.

In step 72, the controller calculates DSP resources the request for radio link setup will consume. The controller should know beforehand DSP resources the uplink and downlink processing of each service of each standard will consume. For instance, through the above-mentioned estimation process, the controller can know DSP resources the uplink and downlink processing of each service of each standard will consume.

For example, if the request for radio link setup is UMTS-FDD voice service, the total DSP resources to be consumed are: DSP resources required for downlink processing of UMTS-FDD voice service + DSP resources required for uplink processing of UMTS-FDD voice service (with reference to Table 2 and Table 4).

If the request for radio link setup is UMTS-FDD data service, the total DSP resources to be consumed are: DSP resources required for downlink processing of UMTS-FDD data service + DSP resources required for uplink processing of UMTS-FDD data service (with reference to Table 2 and Table 4, which only estimate DSP resources required for 64kbps data service. Of course, those skilled in the art should understand that DSP resources required for other rate of data service can be estimated according to the same method).

If the request for radio link setup is HSDPA data service, the total DSP resources to be consumed are: data rate × (total DSP resources required for data service of 14Mbps/14Mbps) (with reference to Table 6).

After calculation of DSP resources the request for radio link setup will consume, the flow goes to step 74. In step 74, the controller decides whether the base band board has sufficient DSP resources to meet the request for radio link setup. If the controller finds that the remaining DSP resources can meet the required DSP resources, the flow goes to step 75. Otherwise, the flow goes back to the wait state for another request.

In step 75, the controller allocates one DSP (e.g. for voice service and data service of UMTS-FDD) or more DSPs (e.g. for data service of HSDPA) to the request for radio link setup. Then, the controller loads from the storage means the corresponding components to the DSP (if the allocated DSP has no components for processing the request for radio link step) and configures the DSP (such as initialization of a link port for sending or receiving a packet).

Upon completion of step 75, the flow goes to step 76. In this step, the controller updates available DSP resources. After updating, the flow goes back to the wait state for another request.

Again with reference to step 71, if the request is radio link deletion, the flow goes to step 73.

In step 73, the controller deletes allocation to the radio link connection and takes back DSP resources allocated for processing the radio link connection.

Upon completion of step 73, the flow goes to step 76. In this step, the controller updates available DSP resources. After updating, the flow goes back to the wait state for another request.

Various changes and alternations can be made without departing from the concept and scope of the present invention. It should be understood that the present invention is not limited to the specific embodiments, and the scope thereof is defined by the claims as appended.

## Claims

1. A base band board supporting multiple standards, **characterized in that** the base band board comprises only one DSP cluster, a plurality of DSPs of the DSP cluster being connected together via a bus for providing resources for uplink and downlink processing of various services of each standard, the base band board further comprises a controller for controlling allocation of resources of the plurality of DSPs, the controller performing corresponding processing based on the type of a received request message and resources of the DSP cluster required by the uplink and downlink processing of various services of each standard.

2. The base band board as claimed in claim 1, **characterized in that** the base band board further comprises storage means, the storage means being connected via the bus with the DSP cluster and comprising components for achieving each task of the uplink and downlink processing of various services of each standard.

3. The base band board as claimed in claim 1, **characterized in that** the controller is one of the DSPs of the DSP cluster.

4. The base band board as claimed in claim 1, **characterized in that** the controller is a processor which is connected with the DSP cluster via the bus.

5. The base band board as claimed in any one of claims 1-4, **characterized in that** the base band board supports two standards, namely the Universal Mobile Telecommunications System-Frequency Division Duplex (UMTS-FDD) standard and the High Speed Downlink Packet Access (HSDPA) standard.

6. The base band board as claimed in claim 5, **characterized in that** if the received request message involves setting up a UMTS-FDD service link, the controller computes resources of the DSP cluster required for the UMTS-FDD service and performs corresponding processing; if the received request message involves setting up a HSDPA service link, the controller computes resources of the DSP cluster required for the HSDPA service link and performs corresponding processing; if the received request message involves setting up a UMTS-FDD service link and a HSDPA service link, the controller computes resources of the DSP cluster required for both the UMTS-FDD service link and the HSDPA service link, respectively, and performs corresponding processing.

7. A method of a base band board, which supports multiple standards, processing multi-standard services, the base band board comprises only one DSP cluster, a plurality of DSPs of the DSP cluster being connected together via a bus for providing resources for uplink and downlink processing of various services of each standard, the base band board further comprises a controller for controlling the allocation of resources of the plurality of DSPs, the method **characterized by** the steps of:
receiving, by the controller, a request message;
deciding, by the controller, the type of the received request message; and
performing, by the controller, corresponding processing based on the decision result.

8. The method as claimed in claim 7, **characterized in that** if the request message is link setup, the controller computes the resources required, and if the controller finds, through judgment, that the remaining resources can meet the required resources, the controller allocates resources to the link requested to be set up and updates available resources.

9. The method as claimed in claim 7, **characterized in that** if the request message is link deletion, the controller takes back resources allocated to the link and updates available resources.

10. The method as claimed in any one of claims 7-9, **characterized in that** the base band board further comprises storage means, the storage means being connected via the bus with the DSP cluster and comprising components for achieving each task of uplink and downlink processing of various services of each standard.

11. The method as claimed in any one of claims 7-9, **characterized in that** the base band board supports two standards, namely the Universal Mobile Telecommunications System-Frequency Division Duplex (UMTS-FDD) standard and the High Speed Downlink Packet Access (HSDPA) standard.

12. The method as claimed in claim 11, **characterized in that** if the received request message involves setting up a UMTS-FDD service link, the controller computes resources of the DSP cluster required for the UMTS-FDD service link and performs corresponding processing; if the received request message involves setting up a HSDPA service link, the controller computes resources of the DSP cluster required for the HSDPA service link and performs corresponding processing; if the received request message involves setting up a UMTS-FDD service link and a HSDPA service link, the controller computes resources of the DSP cluster required for both the UMTS-FDD service link and the HSDPA service link, respectively, and performs corresponding processing.
